Europäisches Patentamt

European Patent Office

Office européen des brevets

(19)

(11) Numéro de publication: **0 003 453**
**B1**

(12) **FASCICULE DE BREVET EUROPEEN**

(45) Date de publication du fascicule de brevet: **01.04.81**

(21) Numéro de dépôt: **79400030.7**

(22) Date de dépôt: **16.01.79**

(51) Int. Cl.³: **F 16 P 1/02**, F 16 F 7/12, G 21 D 1/02

(54) Dispositif de protection de volant d'inertie.

(30) Priorité: **30.01.78 FR 7802497**

(43) Date de publication de la demande:
**08.08.79 Bulletin 79/16**

(45) Mention de la délivrance du brevet:
**01.04.81 Bulletin 81/13**

(84) Etats Contractants Désignés:
**BE DE GB IT SE**

(56) Documents cités:
**FR - A - 2 065 832**
**FR - A - 2 240 661**
**FR - A - 2 284 801**

(73) Titulaire: **COMMISSARIAT A L'ENERGIE ATOMIQUE Etablissement de Caractère Scientifique Technique et Industriel B.P. 510 F-75752 Paris Cedex 15 (FR)**

(72) Inventeur: **Chabre, André 14, rue Dombasle F-75015 Paris (FR)**
Inventeur: **de Saint Ours, Gérard Côte de Chantepie F-91780 Chalo Saint Mars (FR)**
Inventeur: **Vrillon, Bernard 15, rue des Ecoles F-91320 Wissous (FR)**

(74) Mandataire: **Mongredien, André et al, c/o Brevatome 25, rue de Ponthieu F-75008 Paris (FR)**

Courier Press, Leamington Spa, England.

Dispositif de protection de volant d'inertie

La présente invention a pour objet un dispositif de protection contre la rupture d'un volant d'inertie.

De façon plus précise, la présente invention a pour objet un dispositif qui permet de protéger une installation vis-à-vis des dégâts que pourrait entraîner une éventuelle rupture d'un volant d'inertie monté sur une machine tournante. Cette machine tournante peut être par exemple une pompe primaire pour un réacteur nucléaire.

Le dispositif objet de l'invention concerne plus particulièrement le cas où la machine tournante a un axe horizontal et où le volant représente une masse relativement importante. Ce dispositif est particulièrement intéressant lorsque la machine tournante, par exemple un groupe moto-pompe, est placée à l'intérieur d'une enceinte qui participe à la sûreté de l'ensemble de l'installation, ce qui est le cas, comme on le sait, des installations nucléaires pour la production d'énergie électrique.

On connaît, par exemple par le brevet français 2 240 661, un dispositif destiné à détruire l'énergie emmagasinée dans un volant sans causer de dégâts appréciables à ce qui se trouve à l'extérieur. Le carter de protection décrit dans ce brevet épouse la forme du volant et est exécuté dans une matière ayant une température de fusion pour laquelle la matière du volant a encore un résistance mécanique importante, la matière du carter ayant un bon coefficient de frottement par rapport à la matière du volant, la fragilité de la matière du carter étant très faible et son allongement très grand.

Cependant, un tel dispositif de protection ne comporte pas d'absorbeur de chocs susceptible d'absorber l'énergie du volant. Le dispositif de l'invention remédie à ces inconvénients.

Plus précisément encore, le dispositif permet d'éviter l'envol d'une fraction de ce volant d'inertie qui se transformerait alors en projectile, ce projectile pouvant endommager l'enceinte de confinement.

Les hypothèses prises en considération sont les suivantes:

— la vitesse de rotation du volant est égale à la vitesse nominale de rotation;

— on prend seulement en compte le cas de l'envol d'un quart du volant, et

— on prévoit les possibilités de transformation de l'énergie cinétique de rotation en énergie cinétique de translation lors de la rupture accidentelle du volant.

En conclusion, le dispositif objet de l'invention permet d'établir une protection autour du volant de telle façon qu'à la suite de l'envol du quart du volant d'inertie, il n'y ait pas création de missile direct ou secondaire pouvant venir frapper d'autres installations.

Le dispositif de protection d'un volant d'inertie tournant autour d'un axe et monté à l'intérieur d'une enceinte comportant au moins deux bâtis d'ancrage se caractérise en ce qu'il comprend un capot de forme générale hémicylindrique dont l'axe est parallèle à celui dudit volant et entourant celui-ci et un bras horizontal dont la première extrémité est rigidement fixée au voisinage du sommet dudit capot et au moins trois ensembles d'absorption de chocs, un desdits ensembles étant fixé entre la deuxième extrémité dudit bras et un desdits bâtis et travaillant selon une direction horizontale, deux autres ensembles étant fixés entre les bords inférieurs dudit capot et un deuxième bâti et travaillant selon des directions orthogonales à celles dudit bras, chaque ensemble absorbeur de chocs pouvant travailler dans un sens et dans l'autre.

De toute façon, l'invention sera mieux comprise à la lecture de la description qui suit de plusieurs modes de réalisation de l'invention, donnés à titre d'exemples non limitatifs. La description se réfère aux figures annexées sur lesquelles on a représenté:

— sur la figure 1, une vue en élévation du dispositif de protection selon un plan perpendiculaire à l'axe de la machine tournante qui a un axe horizontal;

— sur la figure 2, une vue de dessus du dispositif correspondant à la vue de la figure 1,

— sur les figures 3 à 6, des schémas montrant le fonctionnement de l'installation au repos et lors des différents types d'accidents qui peuvent se présenter lors du fonctionnement de la machine tournante lorsque celle-ci a un axe horizontal;

— sur la figure 7, une vue agrandie d'un mode de réalisation d'un absorbeur de chocs intervenant dans la réalisation du dispositif.

Dans la description qui suit, on considère le cas où l'axe de la machine tournante est horizontal. Cependant, l'invention est applicable au cas où cet axe est vertical moyennant une adaptation des structures de fixation que l'on décrira ultérieurement.

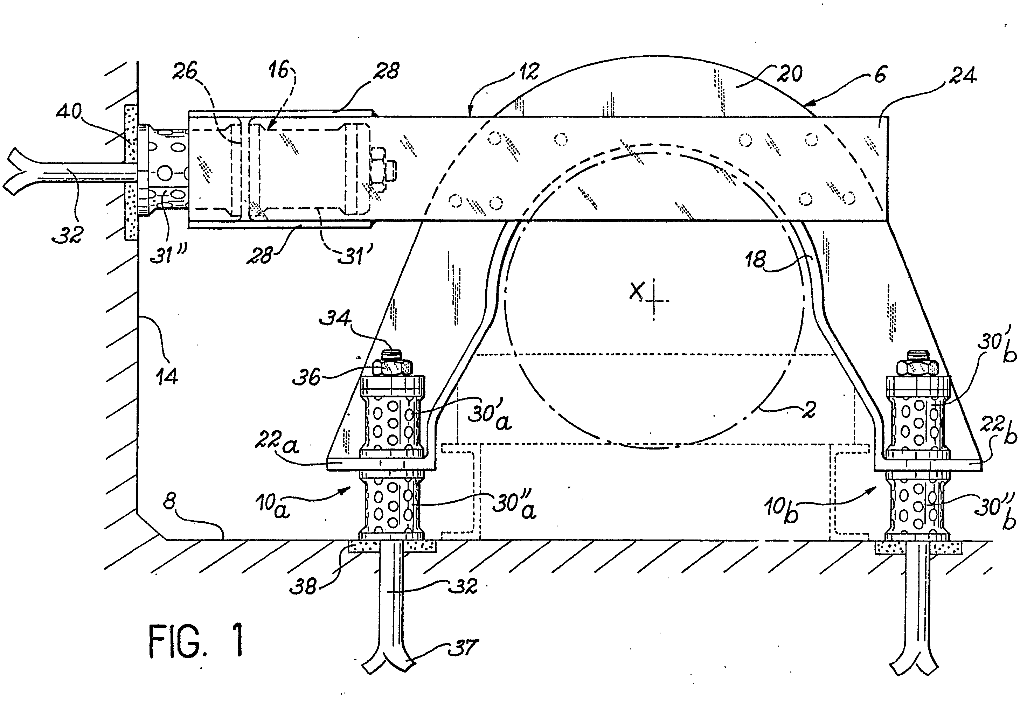

La figure 1 représente l'ensemble de l'installation. Celle-ci comprend essentiellement un volant d'inertie 2 à protéger qui est monté sur un arbre horizontal. Celui-ci est, par exemple, l'arbre d'un moteur d'entraînement d'une pompe pour une installation nucléaire. Il va de soi que le dispositif objet de l'invention pourrait être appliqué dans d'autres cas que celui d'une installation nucléaire. Il faut toutefois noter que c'est pour ce type d'application que l'on rencontre un problème particulièrement aigu en ce qui concerne l'intégrité de l'enceinte dans laquelle est placé le volant d'inertie. De même, ce dispositif de sécurité pourrait s'appliquer pour protéger une enceinte vis-à-vis d'une autre pièce tournante présentant les mêmes risques de rupture.

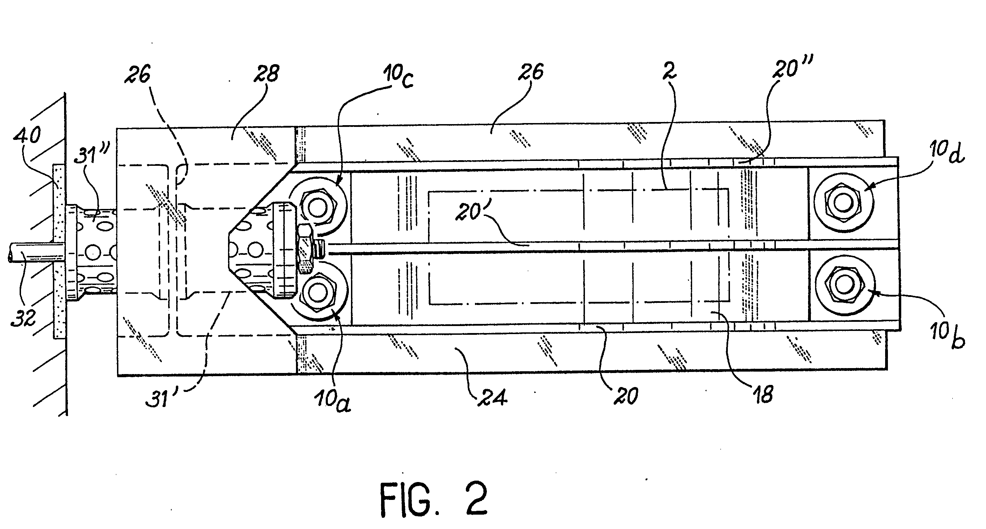

D'une façon générale, le dispositif est constitué par un capot 6 de forme semi-cylindrique entourant le volant d'inertie 2 et une partie de l'arbre et qui est fixé dans le sol 8 par l'intermédiaire de quatre groupes d'absorbeurs de chocs portant la référence générique 10. Sur la figure 1, on a représenté seulement les ensembles d'absorption de chocs 10a et 10b. Sur la figure 2, on a représenté également les ensembles d'absorption de chocs symétriques des deux premiers qui portent respectivement les références 10c et 10d.

L'installation comporte en outre un ensemble de poutres formant un bras 12 dont l'une des extrémités est fixée à la partie supérieure du capot 6 et dont l'autre extrémité est ancrée dans une paroi verticale ou mur 14 par l'intermédiaire d'un autre ensemble d'absorbeurs de chocs horizontaux portant la référence générale 16.

Avant de décrire plus en détail un mode de réalisation préféré de l'invention, il est important de préciser que d'une part, la pièce à protéger, c'est-à-dire le volant d'inertie 2, est totalement entourée par le capot 6 et par le sol 8. En d'autres termes, aucun projectile constitué par des éléments du volant 2 après sa rupture ne peut sortir de cette enceinte. D'autre part, il faut préciser que la structure constituée par le capot 6 et le bras 12 est suffisamment rigide et a une résistance mécanique telle que la quasi totalité de l'effort provenant du choc d'une partie du volant d'inertie en cas de rupture sur le capot est directement transmise aux différents groupes d'absorbeurs de chocs.

Bien entendu, ces absorbeurs de chocs ont pour but d'absorber la quasi totalité de l'énergie due à l'impact d'un éventuel projectile sur le capot 6 afin de maintenir l'intégrité des parois de l'enceinte dans laquelle est placé le volant 2. En particulier, il s'agit de n'appliquer que des contraintes mécaniques très réduites au sol 8 et à la paroi verticale 14. En outre, un autre but de l'invention est que le nombre d'absorbeurs de chocs soit réduit au minimum tout en assurant une protection très efficace quel que soit le type d'accident qui se produise.

Le capot 6 est constitué essentiellement par une tôle cylindrique 18 réalisée par exemple en acier présentant une limite élastique égale à 26 daN/mm² ayant une épaisseur de l'ordre de 20 mm. La résistance mécanique et la rigidité de cette tôle 18 sont améliorées par trois nervures longitudinales référencées 20, 20' et 20'' et plus spécialement visibles sur la figure 2. Les nervures sont bien évidemment réalisées avec le même acier que la tôle 18 et ont également de préférence une épaisseur de l'ordre de 20 mm. A sa partie inférieure, la capot 6 comporte quatre portées de fixation, référencées respectivement 22a, 22b, 22c et 22d ménagées sur les rebords du capot pour permettre la fixation des ensembles d'absorbeurs de chocs 10a, 10b, etc.

Comme on l'a déjà indiqué, le dispositif est complété par un ensemble formant un bras horizontal 12, fixé d'une part sur le capot et, d'autre part, dans la paroi verticale 14 de l'enceinte à protéger. Le bras 12 est essentiellement constitué par deux poutres métalliques 24 et 24' qui sont de préférence constituées par des fers à profil en I. A Leur extrémité libre, ces deux poutres 24 et 24' sont réunies par un fer à profil en U transversal 26 sur lequel est effectivement fixé l'ensemble amortisseur 16. De préférence, la poutre 26 est fixée sur les poutres 24 et 24' par des goussets supérieurs et inférieurs portant la référence générique 28. De préférence, la liaison, d'une part, entre les poutres 24 et 24' et le capot 6 et, d'autre part, entre ces poutres et les goussets 28 et la poutre 26 est assurée par rivetage. Bien entendu, le rivetage est calculé de telle façon que la totalité des efforts appliqués au capot lors de la rupture accidentelle du volant d'inertie soit intégralement transmise aux amortisseurs du groupe 16.

Chaque groupe d'amortisseurs, qu'il s'agisse des groupes 10 ou 16, est constitué par au moins deux absorbeurs de chocs de forme générale cylindrique, chacun portant la référence 30 travaillant dans des directions opposées. Ces groupes de deux amortisseurs 30' et 30'' sont fixés de part et d'autre de la pièce à solidariser. Plus précisément, dans le cas des groupes 10, les amortisseurs 30' et 30'' sont placés de part et d'autre des plats 22. Dans le cas du groupe amortisseur 16, les amortisseurs 31' et 31'' sont fixés de part et d'autre de l'âme de la poutre 26. Les amortisseurs sont fixés dans le parois par des tirants tels que 32 comportant une extrémité filetée 34 coopérant avec un écrou 36 et, à leur autre extrémité, ils sont ancrés (extrémité 37) dans le sol de façon classique. Plus précisément, le sol 8 ou la paroi verticale 14 peuvent avantageusement comporter une semelle 38 et une semelle 40 d'un type particulier pour recevoir les absorbeurs de chocs 30'' et 31''.

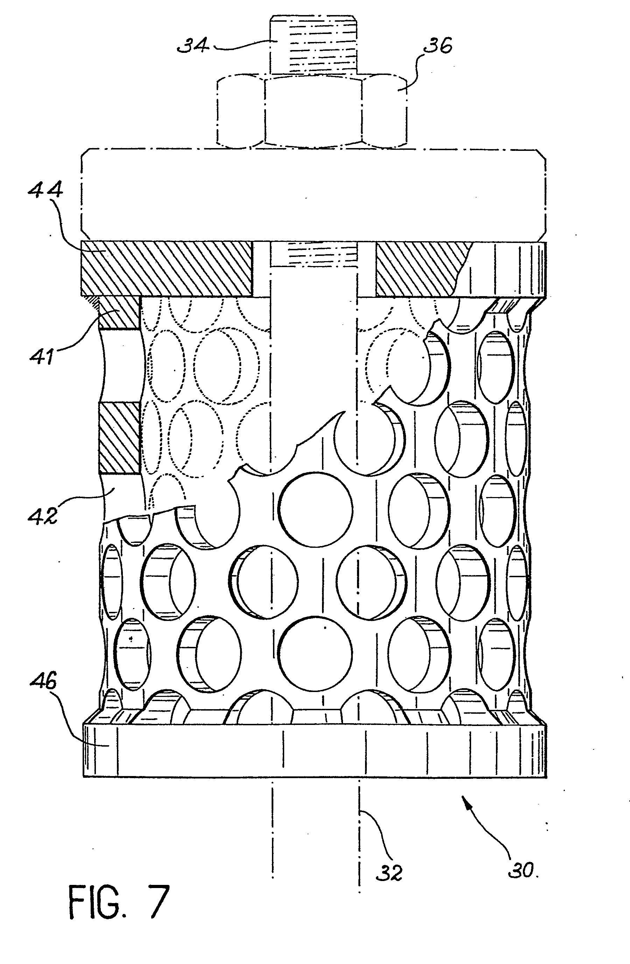

Sur la figure 7, on a représenté en coupe partielle et vue partielle en perspective et en élévation un amortisseur de chocs particulièrement bien adapté pour être utilisé dans le dispositif objet de l'invention. Cet amortisseur est constitué par une couronne cylindrique 41 percée d'orifices circulaires tels que 42 disposés sur des cercles, de telle façon que, selon les génératrices du cylindre constituant ces amortisseurs, on ait sensiblement la même quantité de métal selon toutes les génératrices. L'amortisseur peut comporter une semelle supérieure 44 et une semelle inférieure 46.

Il va de soi que le dimensionnement des différentes pièces ou parties du dispositif doit se faire en fonction des dimensions et de la vitesse de rotation du volant d'inertie, c'est-à-dire en fonction de l'énergie à absorber en cas de rupture de la pièce en mouvement. On peut toutefois préciser que, de toute manière, le capot et le bras sont suffisamment solides pour transmettre en totalité les efforts mécaniques jusqu'aux absorbeurs de chocs afin que ce soit bien ces derniers qui s'écrasent sous l'effet du choc et non les autres organes mécaniques.

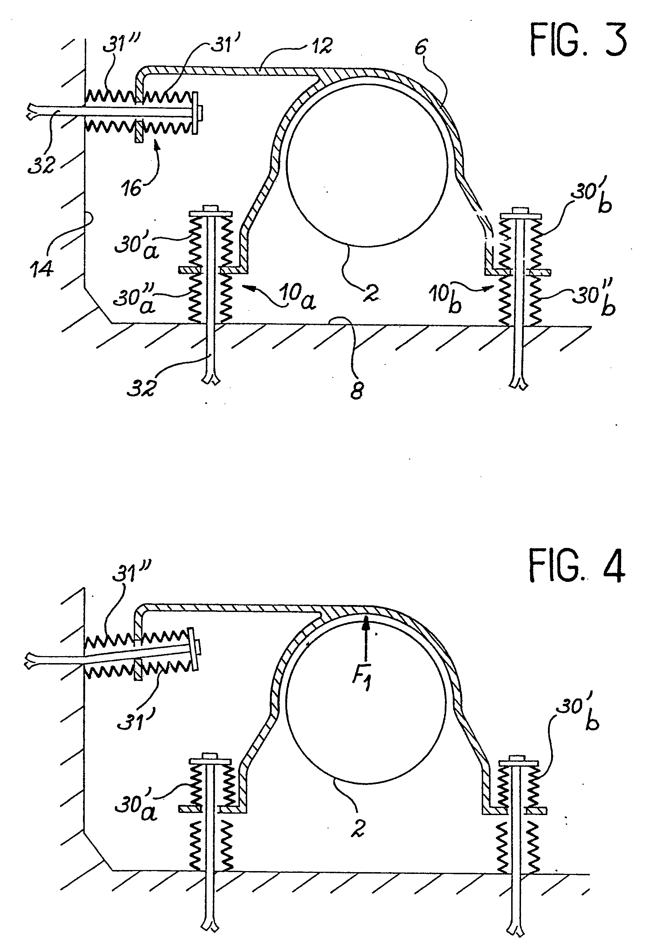

Sur les figures 4 à 6, on a schématisé la façon dont travaillent les différents groupes d'absorbeurs de chocs selon les types d'accidents qui peuvent se produire, la figure 3 représentant l'ensemble au repos.

La figure 4 correspond au cas où la rupture du volant provoque la création de projectiles venant frapper le capot selon une direction verticale. On voit que, dans ce cas, ce sont les éléments amortisseurs 10 qui travaillent, et plus précisément dans ces groupes les absorbeurs supérieurs portant la référence 30'.

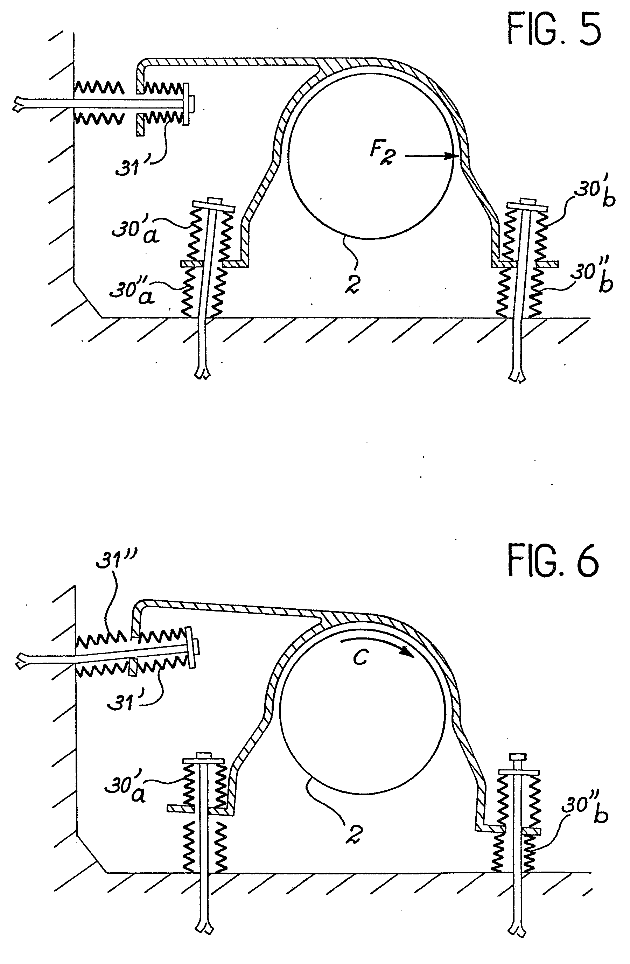

Sur la figure 5, on a illustré le cas d'un choc transversal selon la flèche $F_2$. Dans ce cas, l'ensemble d'amortisseurs 16, et plus précisément l'amortisseur 31' de cet ensemble 16 travaillent comme le montre la figure.

Enfin, la figure 6 illustre le cas où le projectile entraîne un mouvement de rotation du capot figuré par la flèche C. Dans ce cas, comme le montre la figure, ce sont essentiellement les amortisseurs de chocs 30' des groupes 10a et 10c qui travaillent, alors que ce sont les amortisseurs de chocs 30'' des groupes 10b et 10d qui travaillent également.

On voit, d'après la description qui précède, que cette solution permet de confiner la totalité des projectiles pouvant être créés par la rupture d'un volant d'inertie ou, plus généralement, d'une pièce en rotation autour d'un axe horizontal, sans transmettre d'énergie sensible aux parois de l'enceinte dans laquelle est placée la pièce en rotation. Ce résultat est obtenu par des moyens simples mais d'une grande efficacité et d'une grande fiabilité. A titre d'exemple, si l'on considère un volant d'un diamètre de 700 mm, d'une épaisseur de 260 mm et ayant une vitesse de rotation de 1 450 tours/minute, l'énergie cinétique de ce volant est de 577,6 kJ. Compte tenu de cette énergie, cela signifie que le capot doit pouvoir absorber ou plus précisément les ensembles d'absorbeurs de chocs doivent pouvoir absorber 144,4 kJ.

Il faut ajouter que dans un mode simplifié de réalisation, il peut n'y avoir au total que deux ensembles absorbeurs de chocs entre le capot et le sol 8, au lieu des quatre représentés sur la figure 1. Dans ce cas, bien entendu, des tirants 32 associés à ces ensembles sont disposés dans le plan médian vertical du capot perpendiculaire à l'axe XX'.

Comme on l'a déjà indiqué, le dispositif objet de l'invention peut s'appliquer au cas où l'arbre sur lequel est monté le volant d'inertie est vertical. On comprend que dans ce cas, le sol 8 doit être remplacé par un deuxième mur vertical pour l'ancrage des groupes absorbeurs de chocs 10a à 10d. Si l'on ne dispose pas d'un tel deuxième mur, on comprend qu'il est simple de prévoir un bâti vertical suffisamment résistant pour recevoir l'ancrage des groupes absorbeurs de chocs 10a à 10b. Une autre solution dans cette même hypothèse consiste à utiliser le mur 14 pour ancrer les groupes 10a à 10b et à réaliser un bâti pour l'ancrage du seul élément absorbeur de chocs 16 fixé à l'extrémité du bras 12. Dans ce cas, il suffit de prévoir à chaque extrémité du capot hémisphérique 6 un flasque d'extrémité suffisamment résistant pour retenir d'éventuels morceaux du volant après rupture, ayant des trajectoires présentant une composante verticale.

Le fonctionnement de ce mode de réalisation est indentique à celui qui a été décrit en liaison avec le mode de réalisation représenté sur les figures 1 et 2. La modification de la trajectoire des éventuels morceaux de volant due à l'effet de gravité selon la direction verticale est prise en compte par les flasques d'extrémité.

**Revendications**

1. Dispositif de protection d'un volant d'inertie (2) tournant autour d'un axe et monté à l'intérieur d'une enceinte comportant au moins deux bâtis d'ancrage, caractérisé en ce qu'il comprend un capot (6) de forme générale hémicyclique dont l'axe est parallèle à celui dudit volant (2) et entourant celui-ci et un bras horizontal (12) dont la première extrémité est rigidement fixée au voisinage du sommet dudit capot (6) et au moins trois ensembles d'absorption de chocs (10a, 10b, 16), un desdits ensembles (16) étant fixé entre la deuxième extrémité dudit bras (12) et un desdits bâtis et travaillant selon une direction horizontale, deux autres ensembles étant fixés entre les bords inférieurs dudit capot (6) et un autre bâti et travaillant selon des directions orthogonales audit bras (12), chaque ensemble absorbeur de chocs (10a, 10b, 16) pouvant travailler dans un sens et dans l'autre.

2. Dispositif selon la revendication 1, caractérisé en ce que chaque élément d'absorption de chocs (10a, 10b, 16) est constitué par au moins deux absorbeurs de chocs (30'a, 30''a, 30'b, 30''b, 31', 31'') en forme de couronne ayant même axe de révolution, les deux absorbeurs constituant un même ensemble étant disposés de part et d'autre de ladite deuxième extrémité du bras (12) ou d'un des rebords (22a, 22b) dudit capot, l'un des absorbeurs (30''a, 30''b, 31'') étant fixé entre un desdits bâtis et un desdits rebords (22a, 22b) ou l'extrémité dudit bras (12), l'autre absorbeur (30'a, 30'b, 31') de chaque élément étant fixé entre la deuxième extrémité dudit bras 12 et une plaque d'arrêt solidaire d'un desdits bâtis par l'intermédiaire d'un tirant horizontal (32), ou entre un des rebords (22a, 22b) dudit capot (6) et une plaque d'arrêt solidaire d'un autre desdits bâtis par l'intermédiaire d'un tirant vertical (32).

3. Dispositif selon la revendication 2, caractérisé en ce que lesdits absorbeurs de chocs sont constitués par une couronne cylindrique (41) percée de trous circulaires (42) régulièrement répartis sur ladite couronne (41) de telle façon que la quantité de matière selon toutes les génératrices de la couronne (41) soit sensiblement la même.

4. Dispositif selon l'une quelconque des revendications 1 à 3, caractérisé en ce que ledit capot (6) comporte deux flasques d'extrémité fixés rigidement de part et d'autre dudit capot hémisphérique (6) et perpendiculaires audit axe.

## Claims

1. A protective device for an inertia wheel (2) rotating about an axis and mounted inside an enclosure comprising at least two anchoring frames, wherein the said device comprises a cowling (6) of generally semicylindrical form whose axis is parallel to that of the said wheel (2) and which surrounds the latter and a horizontal arm (12), the first end of which is rigidly fixed near the top of the said cowling (6) and at least three shock absorber sets (10a, 10b, 16), one of the said sets (16) being fixed between the second end of the said arm (12) and one of the said frames and operates in a horizontal direction, two other sets being fixed between the lower edges of the said cowling (6) and another frame and operating in directions perpendicular to the said arm (12), whilst each shock absorber set (10a, 10b, 16) may operate in both directions.

2. A device according to claim 1, wherein each shock absorber element (10a, 10b, 16) consists of at least two shock absorbers (30'a, 30''a, 30'b, 30''b, 31', 31'') in the form of crowns having the same axis of rotation, the two absorbers constituting one set being arranged on both sides of the said second end of the arm (12) or one of the edges (22a, 22b) of said cowling, one of the absorbers (30''a, 30''b, 31'') being fixed between one of the said frames and one of the said edges (22a, 22b) or the end of said arm (22a, 22b) or the end of said arm (12), the other absorber (30'a, 30'b) of each element being fixed between the second end of the said arm (12) and a stop plate integral with one of the said frames via a horizontal connecting rod (32) or between one of the edges (22a, 22b) of the said cowling and a stop plate integral with another of said frames via a vertical connecting rod (32).

3. A device according to claim 2, wherein the said shock absorbers consist of a cylindrical crown (41) drilled with circular holes (42) regularly distributed over the said crown (41) so that the quantity of material along all the generating lines of the crown (41) is substantially the same.

4. A device according to claim 1, wherein the said cowling (6) comprises two end cheeks rigidly fixed on each side of the said hemispherical cowling (6) and perpendicular to the said axis.

## Patentansprüche

1. Schutzvorrichtung für eine innerhalb eines wenigstens zwei Verankerungsflächen aufweisenden Raums um eine Achse drehbar gelagerte Schwungscheibe (2), gekennzeichnet durch eine im wesentlichen halbkreisförmige Haube (6), welche mit ihrer Achse parallel zu der der Schwungscheibe (2) angeordnet ist und diese umgibt, durch einen waagerechten Arm (12), welcher mit einem ersten Ende nahe dem oberen Ende der Haube (6) an dieser befestigt ist, und durch wenigstens drei jeweils in einander entgegengesetzten Richtungen wirksame Stoßdämpferanordnungen (10a, 10b, 16), von denen eine zwischen dem zweiten Ende des Arms (12) und einer der Verankerungsflächen angeordnet und in waagerechter Richtung wirksam ist, während zwei weitere Stoßdämpferanordnungen zwischen den unteren Rändern der Haube (6) und einer anderen Verankerungsfläche angeordnet und im zum Arm (12) lotrechten Richtungen wirksam sind.

2. Vorrichtung nach Anspruch 1, dadurch gekennzeichnet, daß jede Stoßdämpferanordnung (10a, 10b, 16) wenigstens zwei koaxial miteinander angeordnete, jeweils die Form einer Buchse aufweisende Stoßdämpferelemente (30'a, 30''a; 30'b, 30''b; 31', 31'') enthält, welche jeweils beiderseits dem zweiten Ende des Arms (12) bzw. jeweils eines Rands (22a, 22b) der Haube angeordnet sind wobei jeweils eines der Elemente (30''a, 30''b, 31'') zwischen einer der Verankerungsflächen und einem der Ränder (22a, 22b) der Haube bzw. dem Ende des Arms (12) und das andere zwischen dem zweiten Ende des Arms (12) und einer über eine waagerechte Zugschraube (32) an einer Verankerungsfläche befestigten Haltescheibe bzw. zwischen einem der Ränder (22a, 22b) der Haube und einer über eine senkrechte Zugschraube (32) an der anderen Verankerungsfläche befestigten Haltescheibe angeordnet ist.

3. Vorrichtung nach Anspruch 2, dadurch gekennzeichnet, daß die Stoßdämpferelemente jeweils die Form einer zylindrischen Buchse (41) haben, welche in einer derartigen, gleichmäßigen Anordnung von kreisförmigen Bohrungen (42) durchsetzt ist, daß entlang allen achsparallelen Mantellinien der Buchse (41) im wesentlichen die gleiche Materialmenge vorhanden ist.

4. Vorrichtung nach wenigstens einem der Ansprüche 1 bis 3, dadurch gekennzeichnet, daß die halbkreisförmige Haube (6) zwei beiderseits lotrecht zur Achse daran befestigte Endflansche aufweist.

FIG. 1

FIG. 2

FIG. 3

FIG. 4

FIG. 5

$F_2$

31'

30'a

30''a

30'b

30''b

2

FIG. 6

31''

31'

30'a

c

2

30''b

4

FIG. 7